# EUROPEAN PATENT SPECIFICATION

(11) **EP 3 448 628 B1**
(45) Date of publication and mention of the grant of the patent: **01.02.2023**
(21) Application number: 16719079.2
(22) Date of filing: 28.04.2016
(51) Int. Cl.: B25J 9/16, B25J 19/06, B25J 19/00

(54) **CONTROL OF A ROBOT JOINT USING TWO DRIVES**
STEUERUNG EINES ROBOTERGELENKS MIT ZWEI ANTRIEBEN
COMMANDE D'ARTICULATION DE ROBOT À L'AIDE DE DEUX ENTRAÎNEMENTS

(43) Date of publication of application: 06.03.2019
(73) Proprietor: ABB Schweiz AG, 5400 Baden (CH)
(72) Inventor: WESTRÖM, Jakob, 724 60 Västerås (SE)
(74) Representative: Kransell & Wennborg KB
(86) International application number: PCT/EP2016/059499
(87) International publication number: WO 2017/186293

(56) References cited:
- WO-A1-2013/104417
- YAMAGUCHI J ET AL: "Development of a biped walking robot having antagonistic driven joints using nonlinear spring mechanism", ROBOTICS AND AUTOMATION, 1997. PROCEEDINGS., 1997 IEEE INTERNATIONAL C ONFERENCE ON ALBUQUERQUE, NM, USA 20-25 APRIL 1997, IEEE, NEW YORK, NY, USA, vol. 1, 20 April 1997 (1997-04-20), pages 185-192, XP010235696, DOI: 10.1109/ROBOT.1997.620036 ISBN: 978-0-7803-3612-4
- WOLF S ET AL: "A new variable stiffness design: Matching requirements of the next robot generation", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19 May 2008 (2008-05-19), pages 1741-1746, XP031340396, ISBN: 978-1-4244-1646-2
- OLIVER EIBERGER ET AL: "On joint design with intrinsic variable compliance: derivation of the DLR QA-Joint", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 1687-1694, XP031743597, ISBN: 978-1-4244-5038-1
- NEVIO LUIGI TAGLIAMONTE ET AL: "Double actuation architectures for rendering variable impedance in compliant robots: A review", MECHATRONICS., vol. 22, no. 8, 13 November 2012 (2012-11-13), pages 1187-1203, XP055332033, GB ISSN: 0957-4158, DOI: 10.1016/j.mechatronics.2012.09.011
- BRAUN DAVID J ET AL: "Robots Driven by Compliant Actuators: Optimal Control Under Actuation Constraints", IEEE TRANSACTIONS ON ROBOTICS, IEEE SERVICE CENTER, PISCATAWAY, NJ, US, vol. 29, no. 5, 1 October 2013 (2013-10-01), pages 1085-1101, XP011528631, ISSN: 1552-3098, DOI: 10.1109/TRO.2013.2271099 [retrieved on 2013-09-30]
- TSAGARIKIS N G ET AL: "A novel variable stiffness actuator: Minimizing the energy requirements for the stiffness regulation", 2010 ANNUAL INTERNATIONAL CONFERENCE OF THE IEEE ENGINEERING IN MEDICINE AND BIOLOGY SOCIETY : (EMBC 2010) ; BUENOS AIRES, ARGENTINA, 31 AUGUST - 4 SEPTEMBER 2010, IEEE, PISCATAWAY, NJ, USA, 31 August 2010 (2010-08-31), pages 1275-1278, XP031793791, ISBN: 978-1-4244-4123-5

## Description

### TECHNICAL FIELD OF THE INVENTION

The present invention relates to the field of robots. The invention more particularly relates to a robot arrangement, robot movement control device, and computer program product for controlling an industrial robot.

### DESCRIPTION OF RELATED ART

A robot section, such as a part of a robot arm is often controlled by a drive comprising a motor, such as a servo motor, together with a gear box.

The control of industrial robots may in theory be so precise that the deviation from a desired position is very small. This allows the robot to perform fine and precise operations.

However, the load of the robot may be high and therefore it is known to use two drives, each comprising a motor and a gear box, for driving a joint. Examples of this is for instance known from WO 2013/104417.

It is also known to use two drives for a joint for redundancy purposes. This is for instance disclosed in EP 2024145.

In both the above mentioned cases the drives are operated in the same way and would also have to have to be of the same type and dimensions.

It is also known to use load balancing techniques for limiting the load on a motor and gear box. Load balancing typically requires the use of a balancing arrangement comprising springs and counterpoises. Examples of load balancing are for instance given in WO 2004/020160. A load balancing arrangement can typically only be used for a specific robot mounting orientation. This means that different arrangements would have to be implemented for the same type of robot being mounted with different orientations such as on the ground or on a ceiling.

Sebastian Wolf and Gerd Hirzinger, "A new variable stiffness design: Matching requirements of the next robot generation", 2008 IEEE International Conference on Robotics and Automation, Pasadena, CA, USA, 19-23 May 2008, pages 1741-1746, discloses a variable tension actuator for a robot; a first motor performs rotational movement of a joint, while a second motor varies the stiffness of the joint via a spring.

Olivier Eiberger, Sami Haddadin, Michael Weis, Alin Albu-Schäffer, Gerd Hirzinger, "On joint design with intrinsic variable compliance: derivation of the DLR OA-Joint", 2010 I EEE International Conference on Robotics and Automation, Anchorage, Alaska, USA, 3-8 May 2010, pages 1687-1694, discloses a quasi-antagonist joint operating according to the same principles as the joint in the aforementioned publication.

Nevio Luigi Tagliamonte, Fabrizio Sergi, Dino Accoto, Giorgio Carpino, Eugenio Guglielmelli, "Double actuation architectures for rendering variable impedance in compliant robots: A review", Mechatronics, vol. 22, no. 8, 13 November 2012, pages 1187-1203, disclose a number of different two-motor robot joint movement principles based on parallel and serial architectures.

David J. Braun, Florian Petit, Felix Huber, Sami Haddadin, Patrick van der Smagt, Alin Albu-Schaffer, Sethu Vijayakumar, "Robots Driven by Compliant Actuators: Optimal Control Under Actuation Constraints", IEEE TRANSACTIONS ON ROBOTICS, vol. 29, no. 5, October 2013, pages 1085-1101, discloses a compliantly actuated robot having two motors, one providing rotation of a joint and the other the stiffness of the joint.

It would in view of what has been described above be of interest to obtain a robot where two drives of different accuracy are possible to use for operating a joint and where the location and mounting orientation of the robot can be made more flexible without requiring a change of the design of the robot.

### SUMMARY OF THE INVENTION

The present invention is therefore directed towards controlling a robot joint using two drives between which the accuracy requirements are allowed to differ.

This object is, according to the present invention, achieved through a robot movement control device as defined in claim 1, a method for controlling movement of an industrial robot as defined in claim 8 and a computer program product for controlling an industrial robot as defined in claim 14.

The present invention has many advantages. Through the use of two motors and two gear boxes it is possible to share the load. Furthermore the accuracy of the control may differ. The accuracy demands on the second motor and second gear box may be lower than the accuracy demands on the first motor and first gear box. It is thereby possible to obtain load sharing but with a simpler realization of the second motor and/or second gear box. The invention also enables load balancing without the use of complex load balancing arrangements.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a robot arrangement comprising a robot and a robot controller,
fig. 2 schematically shows a joint of the robot with a two drives, each comprising a gear box and a motor,
fig. 3 shows a block schematic of the robot controller being connected to the motors, where the robot controller comprises a path planning unit and two control units,
fig. 4 schematically shows a control diagram for controlling the joint using the two gear boxes and motors, the control diagram comprising a path planner, a robot model in the path planning unit and various controls in the control units,
fig. 5 shows a number of method steps being performed in a method for controlling a robot, and
fig. 6 schematically shows a computer program product in the form of a CD Rom disc comprising computer program code for controlling the robot.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

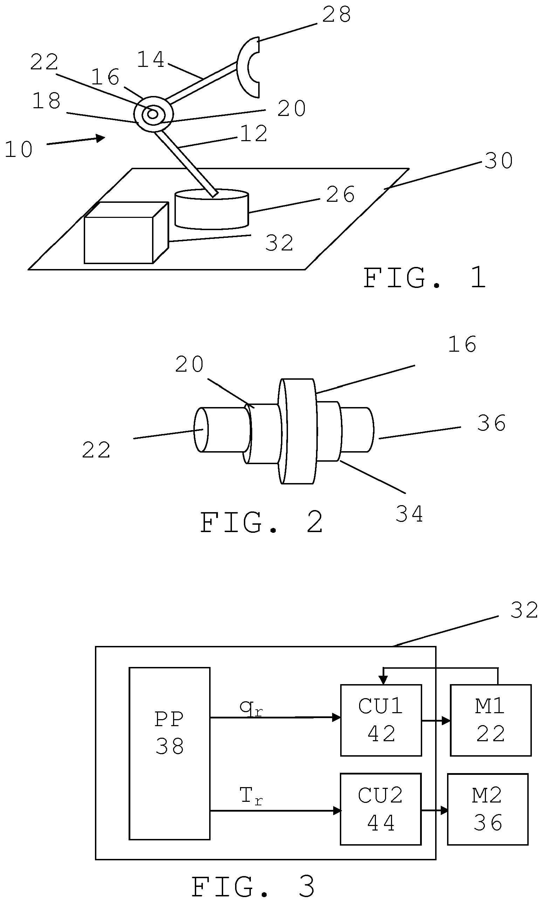

Fig. 1 schematically shows a robot arrangement comprising a robot 10 and a robot controller 32. The robot 10 comprises a number of arm sections 12, 14 connected to each other via joints 16. The robot 10 shown in fig. 1 is simplified and therefore only two arm sections are shown; a first and a second arm section 12 and 14, connected to each other via a joint. This means that in this example only one joint 16 which joins the first and second arm sections 12 and 14 is shown. It should however be realized that a robot normally comprises many more arm sections, typically six and consequently also several more joints that may be controlled.

The first arm section 12 is here connected to a foundation 26. In this way the robot 10 is attached to the foundation 26. There is normally also a joint joining the first arm section 12 to this foundation 26 for allowing the first arm section 12 to be moved in relation to the foundation 26. Thereby the foundation may provide a first axis of rotation. However, this joint has been omitted from fig. 1 for the sake of clarity. The robot normally comprises a tool holder for allowing a tool to be connected to the robot 10. Such a tool is typically connected to the outermost arm section of the robot, i.e. to the arm section furthest away from the foundation 26. Consequently, in fig. 1 one such tool 28 is shown as being attached to the second arm section 14.

Fig. 2 shows a perspective view of two drives connected to the joint 16 for achieving movement of the second arm section.

In order to move the second arm section 14 in relation to the first arm section 12 there is provided a first drive, which first drive comprises a first motor 22 and a first gear box 20, where the first motor 22 is provided for moving the second arm section around a second axis of rotation defined by the joint 16. The first gear box 20 is provided between the first motor 22 and the joint 16. There is furthermore a second drive comprising a second motor 36 and a second gear box 34, where the second drive is also capable of moving the second arm section around the axis of rotation of the joint 16. As can be seen in fig. 2, the second drive may be placed on the opposite side of the joint 16 compared with the first drive. The motors 22 and 36 are furthermore equipped with separate drive shafts. It is here possible that the drive shafts of the motors 22 and 36 both coincide with a common axis of rotation.

The first motor 22 may be a high-precision motor such as a servo motor. The second motor 36 may also be a servo motor. However, it is also possible that the second motor 36 is a motor of lower precision such as an asynchronous motor, a step motor or a direct drive motor. In a similar manner the first gear box 20 may be a high-precision gear box such as cycloid gear box. Also the second gear box 34 may be such a high precision gear box. However, it may also be a gear box having a lower precision especially with regard to backlash. For this reason it is possible that the second gear box 34 is another lower precision gear box, such as a planetary gear box.

In some variations it is also possible that there is one or more sensors connected to the joint. Such a sensor could be provided for sensing at least one property of the robot, where variations in the property are being caused by the operation of the motors 22 and 36. One possible property being sensed in this way is a position of the robot 10 and more specifically the position of the second arm section 14 in relation to the second axis. As an alternative and as will be seen later it is possible that the position is instead detected by the first motor 22.

The robot controller 32 is connected to the robot 10 and more particularly to the two motors 22 and 36 and if there is a position sensor also to this sensor.

A block schematic of the robot controller 32 connected to the motors 22 and 36 is shown in fig. 3. The robot controller 32 comprises a path planning unit PP 38 connected to a first control unit CU1 42 as well as to a second control unit CU2 44. The first control unit 42 is in turn connected to the first motor M1 22, while the second control unit 44 is connected to the second motor M2 36. The path planning unit 38 is further shown as providing a position control signal qᵣ to the first control unit 42 and a torque control signal Tᵣ to the second control unit 44. Finally the first motor 22 is shown as returning a position measurement qᵢₙ₁ to the first control unit 42. This position measurement would replace the previous mentioned position measurement provided by a position sensor.

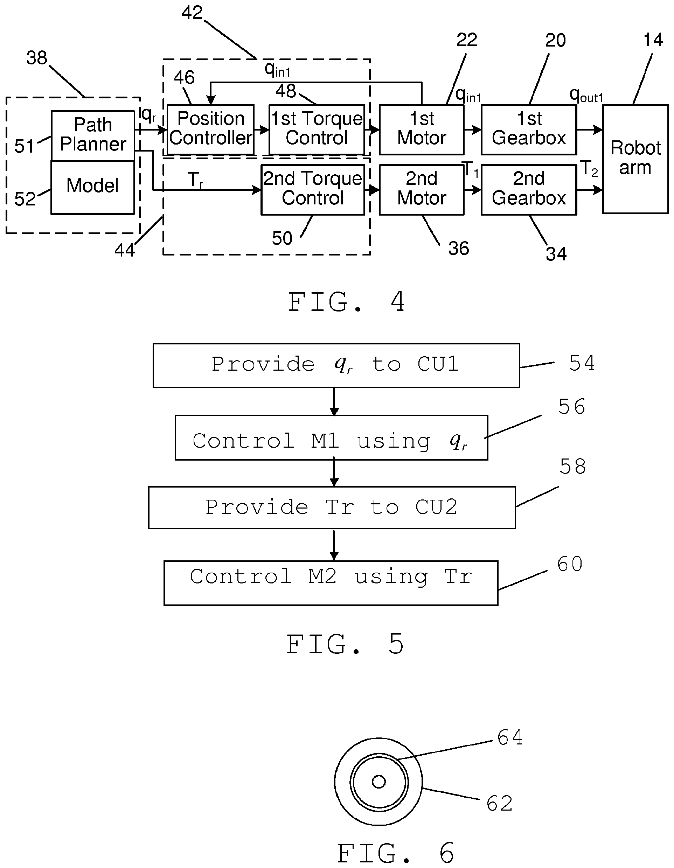

Fig. 4 shows a process control schematic of the path planning unit 38, first and second control units 42 and 44, first and second motors 22 and 36, first and second gear boxes 20 and 34 and the second arm section 14. The path planning unit 38 comprises a path planner 51 that provides control signals for controlling the robot. In this case it provides the position control signal q, in the form of a desired motor position value for the first motor 22 to a first signal input of a position controller or position controller 46 of the first control unit 42. The first control unit 42 also comprises a first torque control 48 or first torque controller and the first position controller 46 has a signal output connected to a signal input of the first torque control 48, which has a signal output connected to the first motor 22. The first motor 22 in turn provides a first motor position qᵢₙ₁ to the gear box 20, which controls the robot arm 14 with a first positional value qₒᵤₜ₁. The detected first motor position qᵢₙ₁ of the first motor 22 is also provided as the position measurement in a feedback loop back to a second input of the position controller 46.

The path planner 51 also provides the torque control signal Tᵣ in the form of a desired motor torque value to a signal input of a second torque control 50 of the second control unit 44, which second torque control 50 has a signal output connected to the second motor 36. Depending on type of motor it is possible that the second motor 36 supplies the second torque control 50 with position and/or speed data. The second motor 36 in turn provides a first torque T₁ to the second gear box 34, which controls the robot arm 14 with a second torque T₂.

The robot model 52 comprises a dynamic model of the robot. Such a model may be used by the path planner 51 in the generation of the control signals. For this reason the robot model 52 is shown as being a part of the path planning unit 38. However, it is possible to also provide it in a separate unit, for instance outside of the robot controller. It should also be realized that the use of a robot model is optional.

Now the operation of the robot arrangement will be described in some more detail with reference also being made to fig. 5, which shows a flow chart of a number of method steps in a method of controlling a robot and being performed by the robot controller 32.

The path planner 51 determines a movement of the robot 10, for instance in order to move the robot along a robot path. The path is typically a path in which the tool 28 is to occupy a certain position at different instances of time. In this the path planner 51 provides a number of control commands for controlling motors to move corresponding arm sections, which movements together contribute to the desired tool movement. Two of the motors being controlled in order to move the second arm section 14 are the first motor 22 connected to the joint 16 via the first gear box 20 and the second motor 36 also connected to the joint 16 via the second gear box 34. In order to achieve the control, the path planner 51 more particularly provides the position control signal q, and the torque control signal Tᵣ.

The position control signal is provided to the first control unit 42, step 54. The path planning unit 38 thereby provides a control value qᵣ indicating a desired position of the second arm section 14 to the position controller 46 of the first control unit 42, where the desired position may be an angle in relation to the rotational axis defined by the joint 16.

The position control value qᵣ is thus provided to the position controller 46 of the path planning unit 38, which after some processing delivers a first torque control signal to the first torque control 48, which in turn further processes the first torque control signal for providing a first control command to the first motor 22. The first motor 22 then controls the position of the arm section 14 with a first motor position qᵢₙ₁, which is translated by the gear box 20 to a first positional value qₒᵤₜ₁ for controlling the arm section 14. Here the first motor position qᵢₙ₁ is also fed back to the first position controller 46 in a feedback control loop. It can in this way be seen that the first control unit 42 controls the first motor 22 using the position control signal qᵣ, step 56.

In a similar manner the path planner 51 provides the torque control signal Tᵣ to the second control unit 44, step 58. The path planner 51 thereby also provides a desired torque value to the second torque control 50 of the second control unit 44. The second torque control 50 further processes the torque control signal Tᵣ for providing a second control command to the second motor 36. The second motor 36 provides a first torque T₁, which is translated by the second gear box 34 to a second torque T₂ for controlling the arm section 14.

It is in this case possible that the desired torque control signal Tᵣ provided to the second control unit 44 corresponds to the desired position control value qᵣ provided to the first control unit 42. Thereby the desired torque control signal may initially at least theoretically be the correct torque for following the position control value qᵣ, where the input to the first torque control 48 would be zero due to the feedback. However, the control performed by the second control unit 44 based on the torque control signal Tr is open-loop position control. There is no adjustment made of the torque control signal based on the response of the robot. There is thus no use of any position feedback signal. Feedback is thus only used by the first control unit 42. Thereby the control values input to the second torque control 50 will not be zero.

This type of realization of the control has several benefits. Through the use of two motors and two gear boxes it is possible to share the load between two drives. Through the first drive using feedback and position control and the second drive using open loop position control and torque control, it is possible for the first drive to perform fine control and the second drive a more coarse control. The accuracy of the control performed by the first drive may thus be higher than the accuracy of the second drive. The accuracy demands on the second drive may thus be lower than the accuracy demands on the first drive. Thereby the two drives may have different tolerances. The tolerances of the second drive may for instance be more relaxed than the tolerances of the first drive. It is for instance possible that the backlash requirements on the second drive are more relaxed than those on the first drive, which may be cost-efficient. It is thereby possible to obtain load sharing with the same performance as a conventional dual drive but with a simpler realization of the second drive. The second motor may for instance be a step motor, asynchronous motor and the second gear box a planetary gear box, while the first motor may be a servo motor and the first gear box a cycloid gear box.

Furthermore, the above mentioned realization has the further advantage in that the second drive may be used for load balancing. Thereby it is also possible to omit complex load balancing arrangements. This means that load balancing may be obtained using the same load balancing functionality irrespective of the mounting orientation of the robot. The robot may thus be mounted on ground, a wall or a ceiling without any physical modifications being made. If a load balancing arrangement employing springs and counterpoises were to be used instead, these would have to have different realizations based on the mounting orientation of the robot. A load balancing arrangement would also inhibit movement in at least some directions. Such movement inhibiting would also be avoided if instead the second drive is used for counterbalancing. It can thus be seen that negative effects of traditional load balancing arrangements on joint motion and manipulator installation can be avoided. This can also be done at a lower cost than using one high capacity and accuracy drive or by using multiple high accuracy drives. It could also be implemented on axes not suitable for traditional load balancing arrangements like axis 3 on a serial link robot. Obviously it could be used for e.g. capacity and or cost reasons also in combination with load balancing arrangements.

As mentioned earlier, the path planning unit may use a dynamic model of the robot in the generation of the control signals. This model may be a rigid body dynamic model of the robot where the positions and torques are determined based on the effects of the model on a desired activity.

Furthermore, when the joint load is low it is possible to compensate the backlash (or lower stiffness at low torques) of the first gear box using the second drive. The second drive may then be controlled to increase the load on the joint in order to preload the first gear box. The torque control signal may therefore be set to preload the backlash of the first gear box using the second motor and second gear box when the load on the arm section is low.

The operation of the robot controller described above is related to the control of the movement of the robot. Therefore the robot controller may also be termed a robot movement control device.

The different units of the robot controller may be provided in the form of one or more processors together with computer program memory including computer program code for performing the functions of these units. As an alternative they may be provided in the form of one or more Application Specific Integrated Circuits (ASIC) or Field-Programmable Gate Arrays (FPGA). This computer program code may also be provided on one or more data carriers which perform the functionality of the robot movement control device when the program code thereon is being loaded in a computer forming the robot movement control device. One such data carrier 62 with computer program code 64, in the form of a CD ROM disc, is schematically shown in fig. 6. Such computer program may as an alternative be provided on a server and downloaded therefrom into the computer forming the parameter determining device.

While the invention has been described in connection with what is presently considered to be most practical and preferred embodiments, it is to be understood that the invention is not to be limited to the disclosed embodiments, but on the contrary, is intended to cover various modifications and equivalent arrangements. It is for instance possible with the use of more drives for operating the joint. Therefore the present invention is only to be limited by the following claims.

## Claims

1. A robot movement control device (32) for controlling an industrial robot comprising a moveable arm section (12, 14), a first motor (20) for moving the arm section (14) around an axis of rotation, a first gear box (22) between the first motor and the arm section, a second motor (36) for moving the arm section (14) around the axis of rotation and for applying torque to the arm section, and a second gear box (34) between the second motor and the arm section, **characterized in that** the device comprises a path planning unit (38) configured to generate a position control signal qᵣ and a torque control signal Tᵣ, a first control unit (42) configured to control the first motor (22) using position control and the position control signal qᵣ and a second control unit (44) configured to control the second motor (36) using torque control and the torque control signal Tᵣ.

2. The robot movement control device (32) according to claim 1,
wherein the second control unit (44) employs an open-loop control of the second motor (36).

3. The robot movement control device (32) according to claim 1 or 2,
wherein the first control unit (42) employs a feed-back control of the first motor (22).

4. The robot movement control device (32) according to any previous claim, further comprising a dynamic model of the robot which the path planning unit considers when generating the position and torque control signals.

5. The robot movement control device (32) according to any previous claim, wherein the path planning unit (38) is configured to compensate the backlash of the first gear box using the second motor (36) and the second gear box (34).

6. The robot movement control device (32) according to any previous claim, wherein the backlash demands are higher on the first gear box (20) than on the second gear box (34).

7. A robot arrangement comprising an industrial robot (10) having a moveable arm section (12, 14), a first motor (20) for moving the arm section (14), a first gear box (22) between the first motor and the arm section, a second motor (36) for applying torque to the arm section, and a second gear box (34) between the second motor and the arm section and a robot movement control device (32) according to any previous claim.

8. A method for controlling movement of an industrial robot (10) comprising a moveable arm section (12, 14), a first motor (20) for moving the arm section (14) around an axis of rotation, a first gear box (22) between first motor and the arm section, a second motor (36) for moving the arm section (14) around the axis of rotation and for applying torque to the arm section, and a second gear box (34) between the second motor and the arm section, and
the method being performed by a robot movement control device (32) comprising a path planning unit (38), a first control unit (42) and a second control unit (44),
the method being **characterized by** comprising the steps of:
- providing (54) a position control signal qᵣ from the path planning unit (38) to the first control unit (42);
- controlling (56), by the first control unit (42), the first motor (22) using the first position control signal;
- providing (58) a torque control signal Tᵣ from the path planning unit (38) to the second control unit (44); and
- controlling (60), by the second control unit (44), the second motor (36) using the torque control signal.

9. The method according to claim 8, wherein the controlling of the second motor comprises controlling the second motor using open-loop control.

10. The method according to claim 8 or 9, wherein the controlling of the first motor comprises controlling the first motor using feed-back control.

11. The method according to any of claims 8 - 10, where the providing of the position control signal and the torque control signal is made based on a dynamic model of the robot.

12. The method according to claim 11, wherein the torque control signal is set to compensate a backlash of the first gear box using the second motor and second gear box.

13. The method according to any of claims 8 - 12, wherein the backlash demands are higher on the first gear box (20) than on the second gear box (34).

14. A computer program product for controlling an industrial robot comprising a moveable arm section (12, 14), a first motor (22) for moving the arm section (14) around an axis of rotation, a first gear box (20) between first motor and the arm section, a second motor (36) for moving the arm section (14) around the axis of rotation and for applying torque to the arm section, and a second gear box (34) between the second motor and the arm section, the computer program product comprising a data carrier (62) with computer program code (64) which when run in a robot movement control device (32) comprising a path planning unit (38), a first control unit (42) and a second control unit (44), causes the robot movement control device to carry out the method according to any of claims 8 - 13.

## Patentansprüche

1. Roboterbewegungssteuervorrichtung (32) zum Steuern eines Industrieroboters, umfassend einen bewegbaren Armabschnitt (12, 14), einen ersten Motor (20) zum Bewegen des Armabschnitts (14) um eine Drehachse, ein erstes Getriebe (22) zwischen dem ersten Motor und dem Armabschnitt, einen zweiten Motor (36) zum Bewegen des Armabschnitts (14) um die Drehachse und zum Aufbringen eines Drehmoments auf den Armabschnitt und ein zweites Getriebe (34) zwischen dem zweiten Motor und dem Armabschnitt, **dadurch gekennzeichnet, dass** die Vorrichtung eine Wegplanungseinheit (38), die dazu ausgelegt ist, ein Positionssteuersignal qᵣ und ein Drehmomentsteuersignal Tᵣ zu erzeugen, eine erste Steuereinheit (42), die dazu ausgelegt ist, den ersten Motor (22) unter Verwendung einer Positionssteuerung und des Positionssteuersignals qᵣ zu steuern, und eine zweite Steuereinheit (44) umfasst, die dazu ausgelegt ist, den zweiten Motor (36) unter Verwendung einer Drehmomentsteuerung und des Drehmomentsteuersignals Tᵣ zu steuern.

2. Roboterbewegungssteuervorrichtung (32) gemäß Anspruch 1, wobei die zweite Steuereinheit (44) eine Steuerung des zweiten Motors (36) durch einen offenen Regelkreis verwendet.

3. Roboterbewegungssteuervorrichtung (32) gemäß Anspruch 1 oder 2, wobei die erste Steuereinheit (42) eine Rückkopplungssteuerung des ersten Motors (22) verwendet.

4. Roboterbewegungssteuervorrichtung (32) gemäß einem der vorhergehenden Ansprüche, ferner umfassend ein dynamisches Modell des Roboters, das die Wegplanungseinheit beim Erzeugen der Positions- und Drehmomentsteuersignale berücksichtigt.

5. Roboterbewegungssteuervorrichtung (32) gemäß einem der vorhergehenden Ansprüche, wobei die Wegplanungseinheit (38) dazu ausgelegt ist, das Spiel des ersten Getriebes unter Verwendung des zweiten Motors (36) und des zweiten Getriebes (34) zu kompensieren.

6. Roboterbewegungssteuervorrichtung (32) gemäß einem der vorhergehenden Ansprüche, wobei die Spielanforderungen an das erste Getriebe (20) höher als an das zweite Getriebe (34) sind.

7. Roboteranordnung, umfassend einen Industrieroboter (10), der einen bewegbaren Armabschnitt (12, 14), einen ersten Motor (20) zum Bewegen des Armabschnitts (14), ein erstes Getriebe (22) zwischen dem ersten Motor und dem Armabschnitt, einen zweiten Motor (36) zum Aufbringen eines Drehmoments auf den Armabschnitt und ein zweites Getriebe (34) zwischen dem zweiten Motor und dem Armabschnitt und eine Roboterbewegungssteuervorrichtung (32) gemäß einem der vorhergehenden Ansprüche aufweist.

8. Verfahren zum Steuern der Bewegung eines Industrieroboters (10), umfassend einen bewegbaren Armabschnitt (12, 14), einen ersten Motor (20) zum Bewegen des Armabschnitts (14) um eine Drehachse, ein erstes Getriebe (22) zwischen dem ersten Motor und dem Armabschnitt, einen zweiten Motor (36) zum Bewegen des Armabschnitts (14) um die Drehachse und zum Aufbringen eines Drehmoments auf den Armabschnitt und ein zweites Getriebe (34) zwischen dem zweiten Motor und dem Armabschnitt, und
wobei das Verfahren durch eine Roboterbewegungssteuervorrichtung (32) durchgeführt wird, die eine Wegplanungseinheit (38), eine erste Steuereinheit (42) und eine zweite Steuereinheit (44) umfasst,
wobei das Verfahren **dadurch gekennzeichnet ist, dass** es die folgenden Schritte umfasst:
- Bereitstellen (54) eines Positionssteuersignals qᵣ aus der Wegplanungseinheit (38) an die erste Steuereinheit (42) ;
- Steuern (56) des ersten Motors (22) durch die erste Steuereinheit (42) unter Verwendung des ersten Positionssteuersignals;
- Bereitstellen (58) eines Drehmomentsteuersignals Tᵣ aus der Wegplanungseinheit (38) an die zweite Steuereinheit (44); und
- Steuern (60) des zweiten Motors (36) durch die zweite Steuereinheit (44) unter Verwendung des Drehmomentsteuersignals.

9. Verfahren gemäß Anspruch 8, wobei das Steuern des zweiten Motors das Steuern des zweiten Motors unter Verwendung einer offenen Regelschleife umfasst.

10. Verfahren gemäß Anspruch 8 oder 9, wobei das Steuern des ersten Motors das Steuern des ersten Motors unter Verwendung einer Rückkopplungssteuerung umfasst.

11. Verfahren gemäß einem der Ansprüche 8 - 10, wobei das Bereitstellen des Positionssteuersignals und des Drehmomentsteuersignals basierend auf einem dynamischen Modell des Roboters erfolgt.

12. Verfahren gemäß Anspruch 11, wobei das Drehmomentsteuersignal so eingestellt wird, dass ein Spiel des ersten Getriebes unter Verwendung des zweiten Motors und des zweiten Getriebes kompensiert wird.

13. Verfahren gemäß einem der Ansprüche 8 - 12, wobei die Spielanforderungen an das erste Getriebe (20) höher als an das zweite Getriebe (34) sind.

14. Computerprogrammprodukt zum Steuern eines Industrieroboters, umfassend einen bewegbaren Armabschnitt (12, 14), einen ersten Motor (22) zum Bewegen des Armabschnitts (14) um eine Drehachse, ein erstes Getriebe (20) zwischen dem ersten Motor und dem Armabschnitt, einen zweiten Motor (36) zum Bewegen des Armabschnitts (14) um die Drehachse und zum Aufbringen eines Drehmoments auf den Armabschnitt und ein zweites Getriebe (34) zwischen dem zweiten Motor und dem Armabschnitt, wobei das Computerprogrammprodukt einen Datenträger (62) mit Computerprogrammcode (64) umfasst, der beim Ausführen in einer Roboterbewegungssteuervorrichtung (32) mit einer Wegplanungseinheit (38), einer ersten Steuereinheit (42) und einer zweiten Steuereinheit (44) die Roboterbewegungssteuervorrichtung veranlasst, das Verfahren gemäß einem der Ansprüche 8 - 13 auszuführen.

## Revendications

1. Dispositif de commande de déplacement de robot (32) pour commander un robot industriel comprenant une section de bras mobile (12, 14), un premier moteur (20) pour déplacer la section de bras (14) autour d'un axe de rotation, une première boîte à engrenage (22) entre le premier moteur et la section de bras, un deuxième moteur (36) pour déplacer la section de bras (14) autour de l'axe de rotation et pour appliquer un couple à la section de bras, et une deuxième boîte à engrenage (34) entre le deuxième moteur et la section de bras, **caractérisé en ce que** le dispositif comprend une unité de planification de trajet (38) configurée pour générer un signal de commande de position qᵣ et un signal de commande de couple Tᵣ, une première unité de commande (42) configurée pour commander le premier moteur (22) à l'aide d'une commande de position et du signal de commande de position qᵣ et une deuxième unité de commande (44) configurée pour commander le deuxième moteur (36) à l'aide d'une commande de couple et du signal de commande de couple Tᵣ.

2. Dispositif de commande de déplacement de robot (32) selon la revendication 1, dans lequel la deuxième unité de commande (44) emploie une commande en boucle ouverte du deuxième moteur (36).

3. Dispositif de commande de déplacement de robot (32) selon la revendication 1 ou la revendication 2, dans lequel la première unité de commande (42) emploie une commande de rétroaction du premier moteur (22).

4. Dispositif de commande de déplacement de robot (32) selon l'une quelconque des revendications précédentes, comprenant en outre un modèle dynamique du robot que l'unité de planification de trajet considère lors de la génération des signaux de commande de position et de couple.

5. Dispositif de commande de déplacement de robot (32) selon l'une quelconque des revendications précédentes, dans lequel l'unité de planification de trajet (38) est configurée pour compenser le jeu de la première boîte à engrenage à l'aide du deuxième moteur (36) et de la deuxième boîte à engrenage (34).

6. Dispositif de commande de déplacement de robot (32) selon l'une quelconque des revendications précédentes, dans lequel les exigences de jeu sont plus élevées sur la première boîte à engrenage (20) que sur la deuxième boîte à engrenage (34).

7. Agencement de robot comprenant un robot industriel (10) ayant une section de bras mobile (12, 14), un premier moteur (20) pour déplacer la section de bras (14), une première boîte à engrenage (22) entre le premier moteur et la section de bras, un deuxième moteur (36) pour appliquer un couple à la section de bras, et une deuxième boîte à engrenage (34) entre le deuxième moteur et la section de bras et un dispositif de commande de déplacement de robot (32) selon l'une quelconque des revendications précédentes.

8. Procédé de commande de déplacement d'un robot industriel (10) comprenant une section de bras mobile (12, 14), un premier moteur (20) pour déplacer la section de bras (14) autour d'un axe de rotation, une première boîte à engrenage (22) entre un premier moteur et la section de bras, un deuxième moteur (36) pour déplacer la section de bras (14) autour de l'axe de rotation et pour appliquer un couple à la section de bras, et une deuxième boîte à engrenage (34) entre le deuxième moteur et la section de bras, et
le procédé étant réalisé par un dispositif de commande de déplacement de robot (32) comprenant une unité de planification de trajet (38), une première unité de commande (42) et une deuxième unité de commande (44),
le procédé étant **caractérisé en ce qu'**il comprend les étapes consistant à :
- fournir (54) un signal de commande de position qᵣ provenant de l'unité de planification de trajet (38) à la première unité de commande (42) ;
- commander (56), par la première unité de commande (42), le premier moteur (22) à l'aide du premier signal de commande de position ;
- fournir (58) un signal de commande de couple Tᵣ provenant de l'unité de planification de trajet (38) à la deuxième unité de commande (44) ; et
- commander (60), par la deuxième unité de commande (44), le deuxième moteur (36) à l'aide du signal de commande de couple.

9. Procédé selon la revendication 8, dans lequel le fait de commander le deuxième moteur comprend le fait de commander le deuxième moteur à l'aide d'une commande en boucle ouverte.

10. Procédé selon la revendication 8 ou la revendication 9, dans lequel le fait de commander le premier moteur comprend le fait de commander le premier moteur à l'aide d'une commande de rétroaction.

11. Procédé selon l'une quelconque des revendications 8 à 10, où le fait de fournir le signal de commande de position et le signal de commande de couple est fait sur la base d'un modèle dynamique du robot.

12. Procédé selon la revendication 11, dans lequel le signal de commande de couple est réglé pour compenser un jeu de la première boîte à engrenage à l'aide du deuxième moteur et de la deuxième boîte à engrenage.

13. Procédé selon l'une quelconque des revendications 8 à 12, dans lequel les exigences de jeu sont plus élevées sur la première boîte à engrenage (20) que sur la deuxième boîte à engrenage (34).

14. Produit de programme informatique pour commander un robot industriel comprenant une section de bras mobile (12, 14), un premier moteur (22) pour déplacer la section de bras (14) autour d'un axe de rotation, une première boîte à engrenage (20) entre le premier moteur et la section de bras, un deuxième moteur (36) pour déplacer la section de bras (14) autour de l'axe de rotation et pour appliquer un couple à la section de bras, et une deuxième boîte à engrenage (34) entre le deuxième moteur et la section de bras, le produit de programme informatique comprenant un support de données (62) avec un code de programme informatique (64) qui, lorsqu'il est exécuté dans un dispositif de commande de déplacement de robot (32) comprenant une unité de planification de trajet (38), une première unité de commande (42) et une deuxième unité de commande (44), amène le dispositif de commande de déplacement de robot à effectuer le procédé selon l'une quelconque des revendications 8 à 13.
